# EUROPÄISCHE PATENTSCHRIFT

(11) **EP 1 429 518 B1**
(45) Veröffentlichungstag und Bekanntmachung des Hinweises auf die Patenterteilung: **02.05.2007**
(21) Anmeldenummer: 03025544.2
(22) Anmeldetag: 08.11.2003
(51) Int. Cl.: H04L 29/06

(54) **Einrichtung und Verfahren zum Verbessern des Zugangs zu Daten- und Informationsdiensten**
Apparatus and method for improved access to data and information services
Appareil et méthode pour améliorer l'accés aux services de données et d'informations

(30) Priorität: 10.12.2002 DE 10257773
(43) Veröffentlichungstag der Anmeldung: 16.06.2004
(73) Patentinhaber: Deutsches Zentrum für Luft- und Raumfahrt e.V., 51147 Köln (DE)
(72) Erfinder: Angermann, Michael, 82166 Gräfelfing (DE); Kammann, Jens, 82205 Gilching (DE); Robertson, Patrick, Dr., 82541 Ammerland (DE)
(74) Vertreter: von Kirschbaum, Albrecht

(56) Entgegenhaltungen:
- EP-A- 0 890 907
- US-A- 6 029 195
- US-A- 6 085 193
- US-B1- 6 249 913
- GLEICH C: "WEB UEBER DEN WOLKEN WIE DAS INTERNET DIE PASSAGIERMASCHINEN EROBERT" CT MAGAZIN FUER COMPUTER TECHNIK, VERLAG HEINZ HEISE GMBH., HANNOVER, DE, Nr. 16, 30. Juli 2001 (2001-07-30), Seiten 80-82, XP001107745 ISSN: 0724-8679
- YUI-WEN HORNG ET AL: "Hybrid prefetching for WWW proxy servers" PARALLEL AND DISTRIBUTED SYSTEMS, 1998. PROCEEDINGS. 1998 INTERNATIONAL CONFERENCE ON TAINAN, TAIWAN 14-16 DEC. 1998, LOS ALAMITOS, CA, USA,IEEE COMPUT. SOC, US, 14. Dezember 1998 (1998-12-14), Seiten 541-548, XP010318668 ISBN: 0-8186-8603-0

## Beschreibung

Die Erfindung betrifft ein Verfahren zum Verbessern des Zugangs zu Daten- und Informationsdiensten über das Internet für Benutzer in einem Verkehrsmittel, das an Bord mit einem Proxy-Server versehen ist, in dem die von den Benutzern am häufigsten von Daten- und Informationsdiensten angeforderten Dokumente cache-gespeichert werden und über den auf der einen Seite die Benutzer mittels jeweils eines Daten-Endgerätes kommunizieren und über den auf der anderen Seite eine Funkverbindung und/oder optische Verbindung vom betreffenden Verkehrsmittel zu den Daten- und Informationsdiensten betrieben wird, wenn sich das Verkehrsmittel bewegt, und in den, wenn sich das Verkehrsmittel in einem stationären oder sonstigem für eine Datenübertragung günstigen Zustand befindet, auf geeignete Weise automatisch ausgewählte, von den Daten- und Informationsdiensten stammende Dokumente, die für die Benutzer während der Reise im Verkehrsmittel zugänglich gemacht werden sollen, zum Caching proaktiv heruntergeladen werden. Unter den auf den Proxy-Server des Verkehrsmittels herunterladbaren Dokumenten werden auch sogenannte Webseiten sowie deren Elemente wie Bilder, Animationen, Klänge, ausführbare Programme, z.B. Applets, sowie komplette Websites oder Teile davon verstanden.

Die Erfindung betrifft auch eine Einrichtung zur Durchführung eines solchen Verfahrens.

Die Verwendung von Datendiensten, insbesondere über das Internet, durchdringt immer weitere Bereiche des menschlichen Lebens. Auch während der Benutzung von so genannten Massenverkehrsmitteln wie Flugzeug oder Bahn besteht ein zunehmendes Bedürfnis nach Verfügbarkeit dieser Dienste, z.B. zur Unterhaltung (Entertainment) oder zur Abwicklung von Geschäften. Die Netzwerkverbindung in diese Verkehrsmittel ist durch ihren mobilen Charakter, der gewöhnlich eine Anbindung durch Funk erfordert, zumeist sehr teuer, aber auch langsam, was zu unerwünschten Wartezeiten für die Benutzer führt.

Wie aus dem Aufsatz von Dr. Klaus Manhart: "Das Office über den Wolken" in der Zeitschrift "Funkschau", 15/2001, Seiten 22 bis 25 hervorgeht, gibt es bereits einige Anbieter für Netzzugang in Flugzeugen. Das von der Firma Boeing, Seattle, USA angebotene System "Connexion by Boeing" beruht auf einer Breitband-Datenkommunikation und verwendet eine flache, auf dem Rücken des Flugzeuges angebrachte Spezialantenne mit elektronischer Strahlsteuerung auf einen geostationären Nachrichtensatelliten, über den die Funkverbindung zu einer Bodenstation abgewickelt wird, die dann den Zugang zu den betreffenden Datendiensten im terrestrischen Netzwerk eröffnet. Der anfallende Datenverkehr und die Kosten werden verringert, indem in den Flugzeugen untergebrachte Proxy-Server die beliebtesten Webseiten im jeweiligen Flugzeug in einem Cache-Speicher bereithalten.

Einer der größten Boeing-Konkurrenten auf diesem Gebiet ist das US-Unternehmen Tenzing Communications, Seattle, USA, das zu diesem Zweck eine schmalbandige Funkanbindung ebenfalls über Satelliten und eine Bodenstation zum terrestrischen Datennetzwerk vorsieht. Zur technischen Basis der diesbezüglichen Bordtechnologie gehören ein Internet-Server im Flugzeug sowie ein in der Flugzeugkabine installiertes LAN (Local Area Network), über das die Notebooks der Benutzer angebunden sind. Alle 15 Minuten gleicht der Proxy-Server seine gecacheten Webseiten über Satellit mit dem Internet ab.

Aus EP 0 890 907 B1 ist bereits ein Verfahren zur Bereitstellung eines Webzugangs für mehrere Benutzer in einem Verkehrsmittel bekannt, das mit einem im Verkehrsmittel untergebrachten Proxy-Server zur Kommunikation mit den Benutzern und mit einer Einrichtung zur Bereitstellung einer Funkverbindung vom Proxy-Server zum Web versehen ist, wobei diese Einrichtung benutzt wird, während sich das Verkehrsmittel bewegt. Dieses bekannte Verfahren ermöglicht außerdem das Herunterladen von Webseiten auf den Proxy-Server, während das Verkehrsmittel stationär ist. Auf die im Proxy-Server in einem Cache-Speicher gespeicherten Webseiten kann von den Benutzern während einer Reise im Verkehrsmittel zugegriffen werden.

Dieses sogenannte Caching, bei dem wiederholt angefragte Dokumente oder Webseiten nur einmal geladen werden müssen, wird eingesetzt, um auf teuren Satelliten- oder Mobilfunkverbindungen Bandbreite zu sparen. Diese Cache-Speicher können also am Boden bereits "manuell" befüllt werden. So werden beispielsweise mit hoher Wahrscheinlichkeit angefragte Webseiten, wie z.B. www.cnn.com, bereits am Boden über eine kostengünstigere und schnellere Verbindung aus dem Datennetz in den Cache-Speicher des Proxy-Servers an Bord des Flugzeuges geladen. Wie in EP 0 890 907 B1 erwähnt ist, können im stationären Zustand auch in Abhängigkeit von dem Ziel der Reise abhängige Webseiten aus dem Datennetz heruntergeladen werden.

Bei den bekannten, mit reinem Caching arbeitenden Verfahren zur Bereitstellung eines Webzugangs kann der Cache-Speicher nur solche Dokumente speichern, die während der Benutzung durch Passagiere im Verkehrsmittel zumindest einmal über die Funkverbindung abgerufen werden. Alternativ kann der Cache-Speicher im stationären Zustand des Verkehrsmittels, also z.B. dann, wenn ein Passagierflugzeug am Boden ist, manuell vorbestückt werden. Hierbei ist es von Nachteil, dass die Auswahl entweder nur auf einer groben Schätzung oder auf einer Statistik beruht, die in einem anderen Kontext gewonnen wurde. Darüber hinaus ist es nachteilig, dass dann, wenn während der Reise die festgelegte Kapazität der Funkverbindung nicht zu 100 % ausgelastet ist, in der Regel trotzdem die angemietete, aber nicht vollständig ausgenutzte Bandbreite bezahlt werden muss.

Der Erfindung liegt die Aufgabe zu Grunde, die mit Caching arbeitenden Verfahren zum Bereitstellen des Zugangs zu Daten- und Informationsdiensten, insbesondere über das Internet, so weiterzubilden, dass Kosten und Wartezeiten des Zugangs reduziert werden. Es soll auch eine Einrichtung zur Durchführung des durch die Erfindung verbesserten Caching-Verfahrens geschaffen werden.

Gemäß der Erfindung, die sich auf ein Verfahren der eingangs genannten Art bezieht, wird diese Aufgabe in vorteilhafter Weise dadurch gelöst, dass die Anforderung eines Dokuments vom Proxy-Server an Bord des Verkehrsmittel sofort oder zeitnah über die Funkverbindung bzw. optische Verbindung oder erst im stationären Zustand des Verkehrsmittels über eine Kabelverbindung an einen über das Internet erreichbaren Statistik-Server, der nicht auf dem Verkehrsmittel, sondern stationär am Boden angeordnet ist, übertragen wird, dass in diesem Statistik-Server über das Verhalten der Benutzer, was das Anfordern von Dokumenten der Daten- und Informationsdienste betrifft, automatisch Statistiken gewonnen werden und dass ausgehend von diesen gewonnenen Statistiken unter Anwendung von Optimalitätsentscheidungskriteion, für die ein Schätzwert für die Zugriffswahrscheinlichkeiten herangezogen wird, Dokumente automatisch ausgewählt werden, die in den Proxy-Server an Bord des Verkehrsmittels für das Caching proaktiv heruntergeladen werden.

Eine automatisierte Gewinnung von diesbezüglichen Statistiken und eine darauf basierende automatische Beschaffung von Dokumenten für eine Vielzahl von Benutzern in einem Verkehrsmittel ist bisher nicht bekannt. Aus US-A-6 029 195 ist es im Zusammenhang:mit der anwenderangepassten elektronische Identifizierung von erwünschten Objekten, wie z.B. Artikeln oder Dokumenten, in einer elektronischem Medienumgebung bekannt, für derartige Zielobjekte ein sogenanntes Prefetching im Rahmen eines Browsing-Systems vorzunehmen. Ein erfolgreiches Prefetching hängt von der Fähigkeit des Systems ab, die nächsten, das Anfordern von Objekten betreffenden Aktionen der Nutzer vorherzusehen. In : diesem Zusammenhang ist es aus US-A-6 029 195 bekannt, über das verhalten von in Gruppen zusammenfassbaren Nutzern, was das Anfordern von Objekten betrifft, Statistiken zu führen und ausgehend von diesen Statistiken unter Anwendung von Optimalitätsentscheidungskriterien Objekte auszuwählen. Es wird in US-A-6 029 195 eine Lösung für das Problem der Auswahl von statistisch vorhergesagten Objekten angeboten, die darin besteht, dass in einem lokalen Proxy-Server jedes Nutzers für eine bestimmte Dauer die für die Nutzergruppe ausgewählten Objekte gehalten und bei Nichtanforderung durch den jeweiligen Nutzer in dessen Proxy-Server gelöscht werden sollen.

Durch die automatische Gewinnung von Statistiken über das Benutzerverhalten kann gemäß der Erfindung bereits vor Beginn der eigentlichen Reise im Verkehrsmittel automatisch eine optimale Entscheidung über die einzulagernden Dokumente getroffen werden. Die durch die Erfindung vorgeschlagene Architektur ermöglicht es, während der Reise ungenutzte Bandbreite zur Verringerung der Wartezeit zu benutzen.

In zweckmäßiger Weise werden Statistiken für jeden einzelnen Benutzer und/oder jede Nationalität und/oder jedes Reiseziel und/oder jede Reisezeit und/oder weitere Parameter gewonnen und für die Auswahl der auf den Proxy-Server herünterzuladenden Dokumente benutzt, so dass sich eine Maximierung der Trefferquote beim Caching ergibt.

Die Dokumente mit hohen Zugriffswahrscheinlichkeiten werden zweckmäßig zuerst geladen. Die Dokumente werden dann vorteilhaft in der Reihenfolge der geschätzten Zugriffswahrscheinlichkeiten, beginnend mit dem wahrscheinlichsten Dokument, in den Proxy-Server an Bord des Verkehrsmittels heruntergeladen.

Eine diesbezügliche Weiterbildung des Verfahrens nach der Erfindung besteht darin, dass nur Dokumente, deren geschätzte Zugriffswahrscheinlichkeit einen Schwellenwert übersteigt, in den Proxy-Server heruntergeladen werden. In vorteilhafter Weise kann dann der Schwellenwert für die geschätzte Zugriffswahrscheinlichkeit dynamisch in Abhängigkeit von den Eigenschaften der verfügbaren Verbindungen angepasst werden.

Bei der Entscheidung über die anzufordernden Dokumente können ausgewählten Dokumenten von diesem Verfahren abweichende Prioritäten zugewiesen werden.

Die Funkverbindung oder optische Verbindung zwischen dem betreffenden Verkehrsmittel und den Daten- und Informationdiensten erfolgt insbesondere für den Fall, bei dem das Verkehrsmittel ein ziviles Passagierflugzeug oder Schiff ist, über einen Nachrichtensatelliten. Insbesondere für den Fall, dass das Verkehrsmittel eine Eisenbahn oder ein Omnibus ist, erfolgt die Funkverbindung über den öffentlichen Mobilfunk und/oder über Kurzstreckenfunk wie z.B. Wireless LAN und/oder Bluetooth und/oder in Verbindung von Mobilfunk und digitaler Punkt-zu-Mehrpunktausstrahlung und/oder Kombinationen dieser Techniken mit digitalem Rundfunk (DAB, DVB-T, DVB-S). Es können auch optische Verbindungsstrecken vorgesehen werden.

Neben der Anwendung in der zivilen Luftfahrt ist also vor allem die Versorgung von Bahnreisenden im öffentlichen Personennah- und -fernverkehr ein weiteres Anwendungsgebiet. Hier erfolgt die Anbindung während der Fahrt vor allem mittels relativ teurer Mobilfunkverbindungen. Wird das Verfahren nach der Erfindung für die Bahn eingesetzt, so kann während der Zeiten, in denen der Zug in Bahnhöfen steht bzw. bei Durchfahren durch das Empfangsgebiet, eine günstigere und schnellere Funkverbindung (z.B. IEEE 802.11) oder im stationären Fall eine direkte elektrische oder optische Verbindung eingesetzt werden, um in dieser Zeit Dokumente bzw. Webseiten von den Daten- und Informationsdiensten vorzugsweise über das Internet proaktiv in den Cache-Speicher des bordseitigen Proxy-Servers herunterzuladen.

Eine Einrichtung zur Durchführung des Verfahrens nach der Erfindung zeichnet sich dadurch aus, dass an Bord des Verkehrsmittels ein Proxy-Server vorgesehen ist, der auf der einen Seite über ein lokales Netzwerk mit Daten-Endgeräten, wie z.B. Laptops, der Benutzer im Verkehrsmittel verbunden ist und auf der anderen Seite sowohl an einen bordseitigen Sender/Empfänger angeschlossen ist, der zur Funkverbindung oder zur optischen Verbindung mit Daten- und Informationsdiensten vorgesehen ist, als auch einen Anschluss aufweist, über den bestimmte vorgewählte, von den Daten- und Informationsdiensten stammende Dokumente, die für die Benutzer während der Reise im Verkehrsmittel zugänglich gemacht werden sollen, heruntergeladen werden, dass der Proxy-Server für das Caching einen Cache-Speicher mit Einhol(Prefetching)-Controller zur Speicherung ausgewählter sowohl von über die Funkverbindung bzw. die optische Verbindung übertragenen Dokumenten als auch von vor der Reise heruntergeladenen Dokumenten enthält, dass ein mit dem Proxy-Server zumindest zeitweise in Verbindung stehender, nicht auf dem Verkehrsmittel, sondern stationär auf dem Boden angeordneter Statistik-Server vorgesehen ist, in dem durch die Benutzer über den Proxy-Server von den Daten- und Informationsdiensten angeforderte Dokumente registriert werden und in dem Statistiken über das Verhalten der Benutzer, was das Anfordern von Dokumenten der Daten- und Informationsdienste betrifft, automatisch erstellt werden, dass der Einhol(Prefetching)-Controller, basierend auf den gewonnenen Statistiken des Statistik-Servers, die für die im betreffenden Verkehrsmittel reisenden Benutzer optimalen Dokumente zur Speicherung in den Cache-Speicher zur Verfügung stellt und dass der Einhol(Prerfetching)-Controller durch den Statistikserver ferngesteuert ist und von diesem zum proaktiven Einholen von Dokumenten veranlasst wird und/oder der Statistikserver die Dokumente auf den Proxy-Server lädt ("Push").

In vorteilhafter Weise ist bei einer solchen Einrichtung nach der Erfindung der Einhol(Prefetching)-Controller des Proxy-Servers mit einer oder mehreren Datenbanken gekoppelt. Eine der Datenbanken kann dann eine Passagierdatenbank oder ein Bestandteil eines Flugbuchungssystems sein.

Eine vorteilhafte und zweckmäßige Weiterbildung besteht darin, dass der Einhol(Prefetching)-Controller durch den Statistikserver ferngesteuert wird und von diesem zum proaktiven Einholen von Dokumenten veranlasst wird und/oder der Statistikserver die Dokumente auf den Proxy-Server lädt ("Push").

Das Verfahren und eine vorteilhafte Einrichtung nach der Erfindung werden nachfolgend anhand eines in einer Figur schematisch dargestellten Ausführungsbeispiels für die zivile Luftfahrt erläutert.

Als Verkehrsmittel der zivilen Luftfahrt ist ein Passagierflugzeug 1 mit einem Internet-Zugang im Wege über eine über einen Nachrichtensatelliten 2 verlaufende Funkverbindung 3 zu einer Bodenstation 4 versehen, die über Datenleitungen 5, 6 mit Webservern 7 und beispielsweise einer Workstation 8 verbunden ist, die einen Daten- und Informationsdienst in Gestalt des Internets 9 bilden und Webseiten bzw. Dokumente zur Verfügung stellen können. Zur Realisierung der Funkverbindung ist am Passagierflugzeug ein Funk-Sender/Empfänger 10 vorgesehen.

Die Passagiere an Bord des Flugzeuges 1 können auf Endgeräten 11, wie z.B. Laptops oder in das Flugzeug 1 eingebauten Daten-Endgeräten, das Internet (World Wide Web) oder andere Daten- und Informationsdienste nutzen. Die Laptops und anderen Endgeräte 11 sind mittels eines Local Area Networks (LAN) 12, das drahtgebunden, optisch oder drahtlos arbeiten kann, an einen Proxy-Server 13 mit Einhol(Prefetching)-Controller und Cache-Speicher angebunden.

Über den sich an Bord des Passagierflugzeuges 1 befindenden Proxy-Server 13 können auf der einen Seite die Benutzer mittels jeweils eines Endgerätes 11, z.B. eines Laptops, kommunizieren. Auf der anderen Seite wird, wenn sich das Flugzeug 1 im Flug befindet, über den Proxy-Server 13 und den Funk-Sender/Empfänger 10 eine Funkverbindung 3 mit dem Nachrichtensatelliten 2 als Relais vom Passagierfugzeug 1 zu den Daten- und Informationsdiensten des Internets 9 betrieben und zwar unter Anwendung von Caching, d.h. im Cache-Speicher des Proxy-Servers 13 können Dokumente bzw. Webseiten gespeichert werden, die während der Benutzung durch Passagiere zumindest ein Mal abgerufen worden sind.

In den Cache-Speicher des Proxy-Servers 13 können, wenn sich das Passagierflugzeug 1 im stationären Zustand, also am Boden befindet, bestimmte vorgewählte, von den Daten- und Informationsdiensten des Internets 9 mit den Webservern 7 und der Workstation 8 stammende Dokumente bzw. Webseiten, die für die Passagiere während des Fluges im Flugzeug 1 zugänglich gemacht werden sollen, über eine Kabelverbindung 14 und einen Anschluss 15 direkt ohne den Umweg über eine Satellitenfunkverbindung 3 heruntergeladen werden. Der Einsatz des Cache-Speichers im bordbefindlichen Proxy-Server 13 erspart Bandbreite auf der teuren Satellitenfunkverbindung, da wiederholt angefragte Dokumente bzw. Webseiten nur ein Mal heruntergeladen werden müssen und zwar entweder über die Satellitenfunkverbindung 3 während des Fluges oder möglichst über die sparsame Kabelverbindung 14 am Boden.

Wird von einem Benutzer im Flugzeug 1 ein Dokument bzw. eine Webseite angefordert, so wird dieses Ereignis geloggt und entweder sofort oder zeitnah über die Funkverbindung 3 oder erst am Boden über die Kabelverbindung 14 an einen über das Internet 9 erreichbaren Statistik-Server 16 am Boden übertragen. Im Statistik-Server 16 werden über das Verhalten der Benutzer, was das Anfordern von Dokumenten der Daten- und Informationsdienste betrifft, automatisch Statistiken gewonnen. Der Statistik-Server 16 kann auf diese Weise Statistiken mit hohem Informationsgehalt erstellen.

Es werden vorzugsweise Tabellen mit der Häufigkeit der Anforderungen der Dokumente unter Nebenbedingungen, wie z.B. Tageszeit, Nationalität des Nutzers, Reiseziel, erstellt. Aus diesen Tabellen können Schätzwerte für die bedingten Zugriffswahrscheinlichkeiten der Dokumente gewonnen werden. Eine einfache Ausprägung ist die Verwendung der relativen Häufigkeit eines Dokumentes als Schätzwert für seine Zugriffswahrscheinlichkeit. Komplexere Schätzverfahren wie z.B. Maximum A Posteriori (MAP) Estimation oder Minimum Mean Square Error (MMSE) Estimation können das Schätzergebnis verbessern bzw. Auskunft über die Unsicherheit des Schätzergebnisses liefern.

Ausgehend von diesen gewonnenen Statistiken werden unter Anwendung von Optimalitätsentscheidungskriterien Dokumente bzw. Webseiten automatisch ausgewählt, die in den Cache-Speicher des Proxy-Servers 13 an Bord des Passagierflugzeuges 1 für das Caching heruntergeladen werden. Die Auswahl kann dabei durch die Vorgabe eines Schwellenwertes der Zugriffswahrscheinlichkeit des Dokumentes erfolgen. Nur Dokumente, deren Zugriffswahrscheinlichkeit größer als dieser Schwellenwert ist, werden proaktiv heruntergeladen. Der Schwellwert kann dynamisch in Abhängigkeit von der Art und den Kosten der verfügbaren Verbindungen angepasst werden.

Die Dokumente werden in der Reihenfolge ihrer Zugriffswahrscheinlichkeit, beginnend mit dem wahrscheinlichsten Dokument, angefordert.

Die im Statistik-Server 16 angefertigten Statistiken können z.B. für jede Person, Nationalität, Tageszeit, für jedes Flugziel und für viele andere Parameter erhoben und benutzt werden. Dies erlaubt eine Maximierung der Trefferquote des Einhol(Prefetching)-Controllers für den Cache-Speicher des Proxy-Servers 13.

Es ist sinnvoll und günstig, eine Kopplung des Einhol(Prefetching)-Controllers des Proxy-Servers 13 mit einer Passagierdatenbank oder anderen Personendatenbanken vorzusehen.

Basierend auf den im Statistik-Server 16 angefertigten Statistiken kann das Einholen (Prefetching) der Dokumente bzw. Webseiten noch am Boden oder das Ausnutzen von Überkapazitäten während des Fluges maximiert werden. Hierbei kann der Einhol(Prefetching)-Controller für den Cache-Speicher des Proxy-Servers 13, basierend auf den im Statistik-Server 16 gewonnenen Statistiken, die optimalen Dokumente bzw. Webseiten selektieren. Hierbei ist es sinnvoll, diejenigen Dokumente bzw. Webseiten auszuwählen, die eine hohe Zugriffswahrscheinlichkeit aufweisen.

Durch die gemäß der Erfindung im Ausführungsbeispiel gewählte Architektur der Einrichtung zum Bereitstellen des Zugangs zu Daten- und Informationsdiensten über das Internet 9 für die Passagiere eines Flugzeuges 1 kann die im Statistik-Server 16 gewonnene Statistik sofort, also bereits während der Reise, zur Optimierung benutzt werden. Auf diese Weise werden Kosten gespart und die Leistungsfähigkeit verbessert.

### Bezugszeichenliste

- 1: Passagierflugzeug, Verkehrsmittel
- 2: Nachrichtensatellit
- 3: Funkverbindung
- 4: Bodenstation
- 5, 6: Datenleitungen
- 7: Webserver
- 8: Workstation
- 9: Internet
- 10: Sender/Empfänger
- 11: Endgerät, z.B. Laptop
- 12: Local Area Network (LAN)
- 13: Proxy-Server mit Einhol(Prefetching)-Controller und Cache-Speicher
- 14: Kabelverbindung
- 15: Anschluss
- 16: Statistik-Server

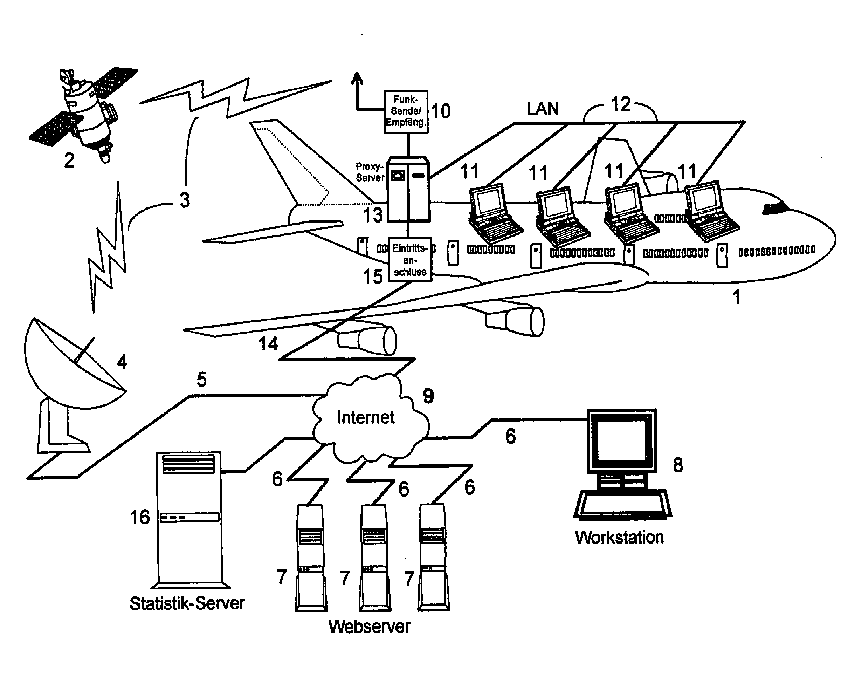

## Patentansprüche

1. Verfahren zum Verbessern des Zugangs zu Daten- und Informationsdiensten über das Internet (9) für Benutzer in einem Verkehrsmittel (1), das an Bord mit einem Proxy-Server (13) versehen ist, in dem die von den Benutzern am häufigsten von Daten- und Informationsdiensten angeforderten Dokumente cache-gespeichert werden und über den auf der einen Seite die Benutzer mittels jeweils eines Daten-Endgerätes (11) kommunizieren und über den auf der anderen Seite eine Funkverbindung (3) und/oder optische Verbindung vom betreffenden Verkehrsmittel zu den Daten- und Informationsdiensten betrieben wird, wenn sich das Verkehrsmittel bewegt, und in den, wenn sich das Verkehrsmittel in einem stationären oder sonstigem für eine Datenübertragung günstigen Zustand befindet, auf geeignete Weise automatisch ausgewählte, von den Daten- und Informationsdiensten stammende Dokumente, die für die Benutzer während der Reise im Verkehrsmittel zugänglich gemacht werden sollen, zum Caching proaktiv heruntergeladen werden, **dadurch gekennzeichnet, dass** die Anforderung eines Dokuments vom Proxy-Server (13) an Bord des Verkehrsmittels (1) sofort oder zeitnah über die Funkverbindung (3) bzw. optische Verbindung oder erst im stationären Zustand des Verkehrsmittels über eine Kabelverbindung (14) an einen über das Internet (9) erreichbaren Statistik-Server (16), der nicht auf dem Verkehrsmittel, sondern stationär am Boden angeordnet ist, übertragen wird, dass in diesem Statistik-Server über das Verhalten der Benutzer, was das Anfordern von Dokumenten der Daten- und Informationsdienste betrifft, automatisch Statistiken erstellt werden und dass ausgehend von diesen Statistiken unter Anwendung von Optimalitätsentscheidungskriterien, für die ein Schätzwert für die Zugriffswahrscheinlichkeiten herangezogen wird, Dokumente automatisch ausgewählt werden, die in den Proxy-Server an Bord des Verkehrsmittels für das Caching proaktiv heruntergeladen werden.

2. Verfahren nach Anspruch 1, **dadurch gekennzeichnet, dass** Statistiken für jeden einzelnen.Benutzer und/oder jede Nationalität und/oder jedes Reiseziel und/oder jede Reisezeit und/oder weitere Parameter gewonnen und für die Auswahl der auf den Proxy-Server (13) herunterzuladenden Dokumente benutzt werden, so dass sich eine Maximierung der Trefferquote beim Caching ergibt.

3. Verfahren nach Anspruch 1, **dadurch gekennzeichnet, dass** für das Herunterladen in den Proxy-Server (13) an Bord des Verkehrsmittels (1) diejenigen Dokumente ausgewählt werden, welche die höchsten geschätzten Zugriffswahrscheinlichkeiten haben.

4. Verfahren nach Anspruch 1, **dadurch gekennzeichnet, dass** die Dokumente in der Reihenfolge ihrer geschätzten zugriffeswahrscheinlichkeiten, beginnend mit dem wahrscheinlichsten Dokument, angefordert und in den Proxy-Server (13) heruntergeladen werden.

5. Verfahren nach Anspruch 1, **dadurch gekennzeichnet, dass** nur Dokumente, deren geschätzte Zugriffswahrscheinlichkeit einen Schwellenwert übersteigt, in den Proxy-Server (13) heruntergeladen werden.

6. Verfahren nach Anspruch 5, **dadurch gekennzeichnet, dass** der Schwellenwert für die geschätzte Zugriffswahrscheinlichkeit dynamisch in Abhängigkeit von den Eigenschaften der verfügbaren Verbindungen angepasst wird.

7. Verfahren nach Anspruch 1, **dadurch gekennzeichnet, dass** bei der Gewinnung der Statistiken über das Verhalten der Benutzer, was das Anfordern von Dokumenten der Daten- und Informationsdienste betrifft, ausgewählten Dokumenten unterschiedliche Prioritäten zugewiesen werden.

8. Verfahren nach einem der vorhergehenden Ansprüche, **dadurch gekennzeichnet, dass** die Funkverbindung (3) und/oder optische Verbindung zwischen dem betreffenden Verkehrsmittel (1) und den Daten- und Informationsdiensten über einen oder mehrere Nachrichtensatelliten (2) erfolgt, insbesondere für den Fall, dass das Verkehrsmittel ein ziviles Passagierflugzeug oder Schiff ist.

9. Verfahren nach einem der Ansprüche 1 bis 7, **dadurch gekennzeichnet, dass** die Funkverbindung zwischen dem betreffenden Verkehrsmittel und den Daten- und Informationsdiensten über den öffentlichen Mobilfunk und/oder Kurzstreckenfunk, z.B. Wireless LAN oder Bluetooth, und/oder in Verbindung von Mobilfunk und digitaler Punkt-zu-Mehrpunktausstrahlung erfolgt, insbesondere für den Fall, dass das Verkehrsmittel eine Eisenbahn oder ein Omnibus ist.

10. Einrichtung zur Durchführung des Verfahrens nach Anspruch 1, wobei an Bord des Verkehrsmittels (1) ein Proxy-Server (13) vorgesehen ist, der auf der einen Seite über ein lokales Netzwerk (12) mit Daten-Endgeräten (11), wie z.B. Laptops, der Benutzer im Verkehrsmittel verbunden ist und auf der anderen Seite sowohl an einen bordseitigen Sender/Empfänger (10) angeschlossen ist, der zur Funkverbindung (3) oder zur optischen Verbindung mit Daten- und Informationsdiensten (7, 8) vorgesehen ist, als auch einen Anschluss (15) aufweist, über den bestimmte vorgewählte, von den Daten- und Informationsdiensten stammende Dokumente, die für die Benutzer während der Reise im Verkehrsmittel zugänglich gemacht werden sollen, heruntergeladen werden, wobei der Proxy-Server (13) für das Caching einen Cache-Speicher mit Einhol Prefetching-Controller zur Speicherung ausgewählter sowohl von über die Funkverbindung bzw. die optische Verbindung übertragenen Dokumenten als auch von vor der Reise heruntergeladenen Dokumenten enthält, **dadurch gekennzeichnet, dass** ein mit dem Proxy-Server zumindest zeitweise in Verbindung stehender, nicht auf dem Verkehrsmittel, sondern stationär auf dem Boden angeordneter Statistik-Server (16) vorgesehen ist, in dem durch die Benutzer über den Proxy-Server von den Daten- und Informationsdiensten angeforderte Dokumente registriert werden und in dem Statistiken über das Verhalten der Benutzer, was das Anfordern von Dokumenten der Daten- und Informationsdienste betrifft, automatisch erstellt werden, dass der Einhol Prefetching-Controller, basierend auf den erstellten Statistiken des Statistik-Servers, die für die im betreffenden Verkehrsmittel reisenden Benutzer optimalen Dokumente zur Speicherung in den Cache-Speicher zur Verfügung stellt und dass der Einhol Prefetching-Controller durch den Statistikserver (16) ferngesteuert ist und von diesem zum proaktiven Einholen von Dokumenten veranlasst wird und/oder der Statistikserver die Dokumente auf den Proxy-Server (13) im "Push" lädt.

11. Einrichtung nach Anspruch. 10, **dadurch gekennzeichnet, dass** der Einhol Prefetching-Controller des Proxy-Servers (13) mit einer oder mehreren Datenbanken gekoppelt ist.

12. Einrichtung nach Anspruch 11, **dadurch gekennzeichnet, dass** eine der Datenbanken eine Passagicrdatenbank oder ein Bestandteil eines Flugbuchungssystems ist.

## Claims

1. A method for improving the access to data and information services via the Internet (9) for users in a means of transportation (1) that has an on-board proxy server (13) in which the documents are cached that are most frequently requested by the users from the data and information services and with which, on the one hand, the user can communicate via a respective data terminal (11) and through which, on the other hand, a radio link (3) and/or an optical link is operated from the respective means of transportation to the data and information services when the means of transportation is moving, and into which server appropriately automatically selected documents coming from the data and information services, which are to be made available to the users during the travel in the means of transportation, are proactively downloaded for caching, when the means of transportation is in a stationary or another state favorable for data transmission, **characterized in that** a request for a document from the proxy server (13) on board the means of transportation (1) is transmitted immediately or in real time via the radio link (3) or the optical link, or only in the stationary state of the means of transportation via a wire link (14), to a statistics server (16) accessible via the Internet (9) and arranged not on board the means of transportation but is stationary on the ground, **in that**, in this statistics server, statistics are automatically set up with respect to the behavior of the users regarding the request for documents from the data and information services, and **in that**, based on those statistics and using optimality decision criteria for which an estimated value for the access probabilities is considered, documents are automatically selected which are proactively downloaded for caching into the proxy server on board the means of transportation.

2. The method of claim 1, **characterized in that** statistics are obtained for each individual user and/or each nationality and/or each destination and/or each time of travel and/or further parameters and are used in selecting the documents to be downloaded onto the proxy server (13), so that a maximization of the hit rate in caching is obtained.

3. The method of claim 1, **characterized in that** those documents are selected for download onto the proxy server (13) on board the means of transportation (1) that have the highest estimated access probabilities.

4. The method of claim 1, **characterized in that** the documents are requested and downloaded onto the proxy server (13) in the order of their estimated access probabilities, starting with the most probable document.

5. The method of claim 1, **characterized in that** only documents, whose estimated access probability exceeds a threshold value, are downloaded onto the proxy server (13).

6. The method of claim 5, **characterized in that** the threshold value for the estimated access probability is adjusted dynamically in dependence on the characteristics of the available links.

7. The method of claim 1, **characterized in that** upon obtaining said statistics on the behavior of the users with respect to requesting documents from the data and information services, selected documents are given different priorities.

8. The method of one of the preceding claims, **characterized in that** the radio link (3) and/or the optical link between the respective means of transportation (1) and the data and information services is established through one or more communications satellite (2), especially if the means of transportation is a civilian airplane or a ship.

9. The method of one of claims 1 to 7, **characterized in that** the radio link between the respective means of transportation and the data and information services is established through public mobile radio and/or digital short range radio, e.g. Wireless LAN or Bluetooth, and/or in connection with mobile radio and digital point-to-multiple-points radiation, especially if said means of transportation is a train or a bus.

10. A device for carrying out the method of claim 1, wherein a proxy server (13) is provided on board the means of transportation (1), which, on the one hand, is connected through a local network (12) to data terminals (11), such as laptops, of the users in the means of transportation, and which, on the other hand, is both connected to an on-board transmitter/receiver (10) provided for establishing a radio link (3) or an optical link to data and information services (7, 8) and comprises a port (15) via which certain pre-selected documents from the data and information services are downloaded, which are to be made available to the users during the travel in the means of transportation, said proxy server (13) including, for caching, a cache memory with a etching/prefetching controller for storing selected documents both transmitted via the radio link or the optical link and downloaded before the travel, **characterized in that** a statistics server (16) is provided which at least periodically communicates with the proxy server and is not provided on board the means of transportation but is stationary on the ground, in which server the documents requested by the users from the data and information services via the proxy server are registered, and in which statistics are automatically established regarding the behavior of the users with respect to requesting documents from the data and information services, **in that** the fetching/prefetching controller, based on the statistics established in the statistics server, makes available in the cache memory the optimum documents for the users traveling in the respective means of transportation, and **in that** the fetching/prefetching controller is remote-controlled by the statistics server (16) and is caused by the same to proactively fetch documents and/or the statistics server loads the documents onto the proxy server (13) in a "push".

11. The device of claim 10, **characterized in that** the fetching/prefetching controller of the proxy server (13) is coupled to one or a plurality of data bases.

12. The device of claim 11, **characterized in that** one of the data bases is a passenger data base or a part of a flight booking system.

## Revendications

1. Méthode pour améliorer l'accès aux services de données et d'informations via l'Internet (9) pour les utilisateurs dans un moyen de transport (1) lequel est pourvu à bord d'un serveur proxy (13), dans lequel les documents le plus fréquemment demandés par les utilisateurs aux services de données et d'informations sont mis en antémémoire et par l'intermédiaire duquel d'une part les utilisateurs communiquent au moyen respectivement d'un terminal de données (11) et/ou par l'intermédiaire duquel d'autre part une liaison radio (3) et/ou liaison optique est établie du moyen de transport concerné aux services de données et d'informations lorsque le moyen de transport se déplace, et dans lequel, lorsque le moyen de transport se trouve dans un état stationnaire ou autre propice à une transmission de données, des documents choisis automatiquement de manière appropriée, provenant des services de données et d'informations, lesdits documents devant être rendus accessibles aux utilisateurs pendant le voyage dans le moyen de transport, sont téléchargés de façon proactive en vue d'une mise en antémémoire, **caractérisée en ce que** la demande d'un document depuis le serveur proxy (13) à bord du moyen de transport (1) est transférée immédiatement ou rapidement par l'intermédiaire de la liaison radio (3) et/ou liaison optique ou seulement à l'état stationnaire du moyen de transport par l'intermédiaire d'une liaison par câble (14) vers un serveur de statistiques (16) accessible par l'Internet (9), ledit serveur n'étant pas disposé sur le moyen de transport mais au sol de façon stationnaire, **en ce que** dans ce serveur de statistiques des statistiques sont automatiquement établies sur le comportement des utilisateurs, en ce qui concerne la demande de documents aux services de données et d'informations et **en ce qu'**à partir de ces statistiques avec utilisation de critères de décision relatifs à l'optimalité, pour lesquels une valeur estimative des probabilités d'accès est utilisée, des documents sont automatiquement choisis, lesquels sont téléchargés de façon proactive dans le serveur proxy situé à bord du moyen de transport pour la mise en antémémoire.

2. Méthode selon la revendication 1, **caractérisée en ce que** des statistiques sont obtenues pour chaque utilisateur et/ou chaque nationalité et/ou chaque destination et/ou chaque durée de trajet et/ou pour d'autres paramètres, et sont utilisées pour le choix des documents à télécharger sur le serveur proxy (13), de sorte que cela donne une maximisation du coefficient d'exhaustivité lors de la mise en antémémoire.

3. Méthode selon la revendication 1, **caractérisée en ce que** pour le téléchargement dans le serveur proxy (13) situé à bord du moyen de transport (1) sont choisis les documents qui ont les plus grandes probabilités d'accès estimées.

4. Méthode selon la revendication 1, **caractérisée en ce que** les documents sont demandés dans l'ordre de leurs probabilités d'accès estimées, à partir du document le plus probable, et sont téléchargés sur le serveur proxy (13).

5. Méthode selon la revendication 1, **caractérisée en ce que** seuls les documents dont la probabilité d'accès estimée dépasse une valeur seuil, sont téléchargés dans le serveur proxy (13).

6. Méthode selon la revendication 5, **caractérisée en ce que** la valeur seuil de la probabilité d'accès estimée est adaptée dynamiquement en fonction des propriétés des liaisons disponibles.

7. Méthode selon la revendication 1, **caractérisée en ce que** lors de l'obtention des statistiques sur le comportement des utilisateurs en ce qui concerne la demande de documents aux services de données et d'informations, des priorités différentes sont attribuées aux documents choisis.

8. Méthode selon l'une quelconque des revendications précédentes, **caractérisée en ce que** la liaison radio (3) et/ou la liaison optique entre le moyen de transport concerné (1) et les services de données et d'informations s'effectue via un ou plusieurs satellites de télécommunications (2), en particulier pour le cas où le moyen de transport serait un avion de ligne civil ou un bateau.

9. Méthode selon l'une quelconque des revendications 1 à 7, **caractérisée en ce que** la liaison radio entre le moyen de transport concerné et les services de données et d'informations s'effectue via le service public de radiotéléphonie mobile et/ou la radio à courte distance, par exemple Wireless LAN ou Bluetooth, et/ou en combinant le service de radiotéléphonie mobile et la radiodiffusion numérique point à multipoint, en particulier pour le cas où le moyen de transport serait un train ou un omnibus.

10. Appareil pour mettre en oeuvre la méthode selon la revendication 1, où à bord du moyen de transport (1), est prévu un serveur proxy (13) qui est relié d'une part via un réseau local (12) à des terminaux de données (11), comme par exemple des ordinateurs portables, des utilisateurs dans le moyen de transport, et qui est d'autre part raccordé non seulement à un émetteur/récepteur (10) embarqué qui est prévu pour la liaison radio (3) et/ou la liaison optique avec des services de données et d'informations (7, 8), et qui comporte également un raccordement (15) par l'intermédiaire duquel sont téléchargés certains documents choisis au préalable, provenant des services de données et d'informations, lesquels doivent être rendus accessibles aux utilisateurs pendant le voyage dans le moyen de transport, sachant que le serveur proxy (13) comprend pour la mise en antémémoire une mémoire cache avec contrôleur de prélecture en vue de mémoriser des documents choisis transmis par la liaison radio et/ou la liaison optique mais également des documents téléchargés avant le voyage, **caractérisé en ce qu'**il est prévu un serveur de statistiques (16) disposé non pas sur le moyen de transport mais de façon stationnaire au sol, étant au moins temporairement en liaison avec le serveur proxy, dans lequel serveur de statistiques sont enregistrés des documents demandés par les utilisateurs via le serveur proxy aux services de données et d'informations, et dans lequel sont automatiquement établies des statistiques sur le comportement des utilisateurs en ce qui concerne la demande de documents aux services de données et d'informations, **en ce que** le contrôleur de prélecture, à partir des statistiques établies du serveur de statistiques, met à disposition les documents optimaux pour les utilisateurs voyageant dans le moyen de transport concerné en vue d'une mémorisation dans la mémoire cache, et **en ce que** le contrôleur de prélecture est télécommandé par le serveur de statistiques (16) et est amené par celui-ci à demander les documents de façon proactive, et/ou le serveur de statistiques charge en « push » les documents sur le serveur proxy (13).

11. Appareil selon la revendication 10, **caractérisé en ce que** le contrôleur de prélecture du serveur proxy (13) est couplé avec une ou plusieurs bases de données.

12. Appareil selon la revendication 11, **caractérisé en ce que** l'une des bases de données est une base de donnés de passagers ou un composant d'un système de réservation de vol.
